**Europäisches Patentamt**

**European Patent Office**

**Office européen des brevets**

(19)

(11) Veröffentlichungsnummer: **0 339 614**

**A2**

(12) # EUROPÄISCHE PATENTANMELDUNG

(21) Anmeldenummer: **89107566.5**

(22) Anmeldetag: **26.04.89**

(51) Int. Cl.⁴: **G01F 11/02**

(30) Priorität: **26.04.88 DE 3814076**

(43) Veröffentlichungstag der Anmeldung:
**02.11.89 Patentblatt 89/44**

(84) Benannte Vertragsstaaten:
**DE ES FR GB IT**

(71) Anmelder: **WALU-APPARATETECHNIK GMBH**
**Lange Strasse 20**
**D-6980 Wertheim-Grünenwört(DE)**

(72) Erfinder: **Lutz, Walter**
**Lange Strasse 20**
**D-6980 Wertheim-Grünenwört(DE)**

(74) Vertreter: **Zinnecker, Armin, Dipl.-Ing.**
**Rechtsanwälte Eduard Lorenz - Dipl.-Ing.**
**Hans-K. Gossel Dr. Ina Philipps - Dr. Paul B.**
**Schäuble Dr. Siegfried Jackermeier Dipl.-Ing.**
**Armin Zinnecker**
**Widenmayerstrasse 23 D-8000 München**
**22(DE)**

(54) **Flaschendispenser.**

(57) Ein Flaschendispenser dient zum Ansaugen und Abgeben von Flüssigkeit. Er besteht aus einem Zylinder (10) mit einem Gegenanschlag (7), einer Kolbeneinheit (9, 6, 2) mit einem in dem Zylinder (10) längsverschieblich geführten Kolben (9) einem Griffstück (2) und einer den Zylinder (10) umgreifenden Führungshülse (6), die koaxial zur äußeren Mantelfläche des Zylinders (10) verläuft. Eine Außenhülse (11) ist koaxial außerhalb der Führungshülse (6) angeordnet und ist mit der Kolbeneinheit (9, 6, 2) axial fest und radial drehbar verbunden. Mit dem Gegenanschlag (7) arbeitet ein Anschlagkörper (8) zusammen, der in der Art eines Kulissensteins in je einer in den Hülsen (6, 11) ausgebildeten axialen Nut und einer wendelförmigen Nut (18.1) verschieblich angeordnet ist, so daß der Hub des Kolbens (9) zur Erzielung unterschiedlicher Saugvolumen veränderbar ist. Um eine genaue und leichtgängige Einstellung des abzugebenden Flüssigkeitsvolumens und gleichzeitig ein einwandfreies Ablesen des eingestellten Flüssigkeitsvolumens zu ermöglichen, ist ein Skalenring (5) vorgesehen, der sowohl mit der Kolbeneinheit (9, 6,2) als auch mit der Außenhülse (11) axial fest und radial drehbar verbunden ist. Der Skalenring (5) ist mit der Kolbeneinheit (9, 6, 2) durch ein Untersetzungsgetriebe (3) derart verbunden, daß einem bestimmten Drehwinkel der Kolbeneinheit (9, 6, 2) ein geringerer Drehwinkel des Skalenringes (5) entspricht.

## Flaschendispenser

Die Erfindung betrifft einen Flaschendispenser zum Ansaugen und Abgeben von Flüssigkeit nach dem Oberbegriff des Anspruchs 1.

Ein derartiger Flaschendispenser ist aus der DE-PS 30 31 830 bekannt. Er besteht aus einem Zylinder und einer Kolbeneinheit mit einem in dem Zylinder längsverschieblich geführten Kolben, einem Griffstück und einer den Zylinder umgreifenden Führungshülse, die koaxial zur äußeren Mantelfläche des Zylinders verläuft. Koaxial außerhalb der Führungshülse ist eine Außenhülse angeordnet, die mit der Kolbeneinheit axial fest und radial drehbar verbunden ist. Ein Anschlagkörper ist in der Art eines Kulissensteins in je einer in den Hülsen ausgebildeten axialen Nut und einer wendelförmigen Nut verschieblich angeordnet. Der Anschlagkörper arbeitet mit einem an dem Zylinder vorgesehenen Gegenanschlag zusammen. Durch eine Relativdrehung zwischen der Außenhülse und der Kolbeneinheit kann also eine Bewegung des Anschlagkörpers in axialer Richtung erzeugt werden, wodurch der Hub des Kolbens zur Erzielung unterschiedlicher Saugvolumen veränderbar ist. Es ist möglich, daß die axiale Nut an der Innenwandung der Außenhülse und die wendelförmige Nut in der Führungshülse, vorzugsweise als durchgehender Schlitz, ausge bildet ist. Es ist auch möglich, im Wege der kinematischen Umkehr die axiale Nut als durchgehenden Schlitz in der Führungshülse und die wendelförmige Nut an der Innenwandung der Außenhülse auszubilden. Die Einzelheiten des vorbekannten Flaschendispensers gehen aus der DE-PS 30 31 830 hervor.

Der vorbekannte Flaschendispenser besitzt weiterhin einen Skalenring, der fest mit der Kolbeneinheit verbunden ist. Er kann beispielsweise einstückig mit dem Griffstück an dessen unterem Ende verbunden sein.

Bei dem vorbekannten Flaschendispenser entspricht die Drehung des Skalenrings der Drehung der Kolbeneinheit. In bestimmten Anwendungsfällen genügt es, wenn der Drehwinkel der Relativdrehung zwischen der Außenhülse und der Kolbeneinheit höchstens 360° beträgt. In manchen Anwendungsfällen ist es jedoch wünschenswert oder erforderlich, einen größeren Drehwinkel erreichen zu können. Mit zunehmendem Drehwinkel kann die Steigung der wendelförmigen Nut verringert werden. Wenn der gesamte Hub des Kolbens verhältnismäßig gering ist, kann es möglich sein, mit lediglich einer einzigen vollen Drehung dennoch eine relativ flach verlaufende wendelförmige Nut unterzubringen. Bei größerem Kolbenhub wird die Steigung der wendelförmigen Nut jedoch im selben Maße größer, wenn man nach wie vor nur eine einzige volle Drehung zwischen der Außenhülse und der Kolbeneinheit zuläßt. In bestimmten Fällen ist es jedoch wünschenswert, eine geringere Steigung der wendelförmigen Nut vorsehen zu können, um beispielsweise eine Selbsthemmung zu erreichen.

Aufgabe der Erfindung ist es, einen Flaschendispenser der eingangs angegebenen Art zu schaffen, mit dem eine genaue und leichtgängige Einstellung des abzugebenden Flüssigkeitsvolumens und gleichzeitig ein einwandfreies Ablesen des eingestellten Flüssigkeitsvolumens möglich ist.

Erfindungsgemäß wird diese Aufgabe durch die im kennzeichnenden Teil des Anspruchs 1 angegebenen Merkmals gelöst. Der Skalenring ist sowohl mit der Kolbeneinheit als auch mit der Außenhülse axial fest und radial drehbar verbunden. Er ist mit der Kolbeneinheit durch ein Untersetzungsgetriebe derart verbunden, daß einem bestimmten Drehwinkel der Kolbeneinheit ein geringerer Drehwinkel des Skalenringes entspricht. Das Untersetzungsverhältnis des Untersetzungsgetriebes ist dabei so abgestimmt, daß der gesamt Drehwinkel des Skalenrings relativ zur Außenhülse höchstens 360° beträgt. Die Relativdrehung zwischen der Kolbeneinheit und der Außenhülse kann mehr als einen vollen Winkel betragen. Beispielsweise kann das Untersetzungsgetriebe derart ausgebildet sein, daß das Untersetzungsverhältnis 2,5 beträgt. Die wendelförmige Nut kann dann so ausgestaltet sein, daß sie über 2 1/2 volle Drehungen verläuft. Die Kolbeneinheit ist dann relativ zur Außenhülse um 2 1/2 Umdrehungen drehbar. Aufgrund des Untersetzungsverhältnisses von 2,5 kann sich der Skalenring um maximal 360° relativ zur Außenhülse drehen. An der Außenhülse ist eine Markierung angebracht, die mit einer Skala auf dem Skalenring zusammenarbeitet.

Durch die erfindungsgemäße Ausgestaltung kann die Steigung der Wendelnuten gering gehalten werden, was eine genaue und leichtgängige Einstellung gewährleistet. Ferner verhindert die geringe Steigung ein selbständiges Verstellen auf Zug (Selbsthemmung). Ein einwandfreies Ablesen des eingestellten Flüssigkeitsvolumens ist dadurch möglich, daß das Untersetzungsgetriebe derart abgestimmt sein kann, daß der Skalenring um höchstens 360° relativ zur Außenhülse drehbar ist. Jeder Winkelstellung des Skalenrings relativ zur Außenhülse entspricht also eindeutig einer einzigen Stellung des Anschlagkörpers. Bei einer wendelförmigen Nut, die sich über mehr als 360° erstreckt, muß die Bedienungsperson sich also nicht merken, ob bereits eine volle Umdrehung zurückgelegt worden ist oder nicht.

Vorteilhafte Weiterbildungen der Erfindung sind in den Unteransprüchen beschrieben. Der Skalenring kann mit dem Griffstück der Kolbeneinheit verbunden sein. Eine besonders einfache Ausbildung ergibt sich, wenn der Skalenring in einer Nut an der Unterseite des Griffstückes geführt ist.

In vorteilhafter Weise ist der Skalenring in einem Absatz am oberen, radial äußeren Ende der Außenhülse gelagert. Der äußere Umfang des Skalenrings fluchtet dann mit dem äußeren Umfang der Außenhülse, was dem gesamten Dispenser ein ansprechendes Äußeres gibt. Weiterhin ist diese Art der Lagerung besonders einfach zu verwirklichen.

Das Untersetzungsgetriebe kann aus einem Zahnradgetriebe bestehen. Hierdurch wird ein Schlupf zwischen der Kolbeneinheit und dem Skalenring mit Sicherheit vermieden. Besonders vorteilhaft ist es, wenn an der Oberseite eines am oberen Ende der Außenhülse vorgesehenen Flansches zwei ineinandergreifende Zahnräder um vertikale, im radialen Abstand verlaufende Achsen drehbar gelagert sind, von denen das radial äußere mit einem mit dem Skalenring fest verbundenen Innenzahnkranz und das radial innere mit einem mit der Kolbeneinheit fest verbundenen Außenzahnkranz kämmt. Durch die Verwendung von zwei ineinandergreifenden Zahnrädern findet keine Drehrichtungsumkehr zwischen der Kolbeneinheit bzw. dem Griffstück einerseits und dem Skalenring andererseits statt. Dies gilt auch für ganzzahlige Vielfache von zwei Zahnrädern. Bei lediglich zwei Zahnrädern erreicht man die fehlende Drehrichtungsumkehr mit dem geringsten Aufwand.

Über den Umfang des Flansches der Außenhülse können mehrere, vorzugsweise drei, Zahnradpaare angeordnet sein. Hierdurch wird eine Verkantung mit Sicherheit vermieden. Weiterhin arbeitet die Untersetzung präziser und ruhiger.

Besonders vorteilhaft ist es, wenn der Innenzahnkranz an der Innenseite eines Zwischenringes aufgebildet ist, der mit dem Skalenring verklebt ist. Der Klebstoff kann so ausgewählt sein, daß er erst nach einer bestimmten Zeit aushärtet. Es ist kann möglich, zunächst den Nullpunkt der Skala exakt einzustellen; hierbei kann eine Relativbewegung zwischen dem Skalenring und dem Zwischenring stattfinden. Anschließend läßt man den Klebstoff in Ruhestellung des Dispensers aushärten. Hierdurch wird die feste Verbindung zwischen dem Zwischenring und dem Skalenring erzeugt. Nach dem Aushärten des Klebstoffs ist der justierte Flaschendispenser gebrauchsfertig.

Der Außenzahnkranz des Zahnradgetriebes kann an der Außenseite des oberen Endes der Führungshülse ausgebildet sein. Besonders vorteilhaft ist es, daß das obere Ende des Außenzahnkranzes der Führungshülse in einen Innenzahnkranz des Griffstücks eingreift. Der Außenzahnkranz der Führungshülse ist also über die axiale Länge des Zahnkranzes des einen Zahnrades hinaus verlängert. Durch das Ineinandergreifen des Außenzahnkranzes der Führungshülse und des Innenzahnkranzes des Griffstückes ist die Führungshülse mit dem Griffstück drehfest verbunden; gleichzeitig ist ein gewisses Spiel in axialer Richtung vorhanden.

Das Griffstück kann eine axiale Zentralbohrung aufweisen, durch die eine mit einem Zentralgewinde der Führungshülse verschraubbare Klemmschraube verläuft. Wenn die Klemmschraube festgezogen wird, wird der Skalenring zwischen dem Griffstück und der Außenhülse festgeklemmt. Das eingestellte Flüssigkeitsvolumen kann also nicht mehr verändert werden; ein versehentliches Verstellen des Flaschendispensers ist nicht möglich. Wenn das Flüssigkeitsvolumen wieder verstellt werden soll, wird die Klemmschraube gelöst. Eine Relativdrehung zwischen dem Griffstück der Kolbeneinheit einerseits und der Außenhülse andererseits ist dann wieder möglich.

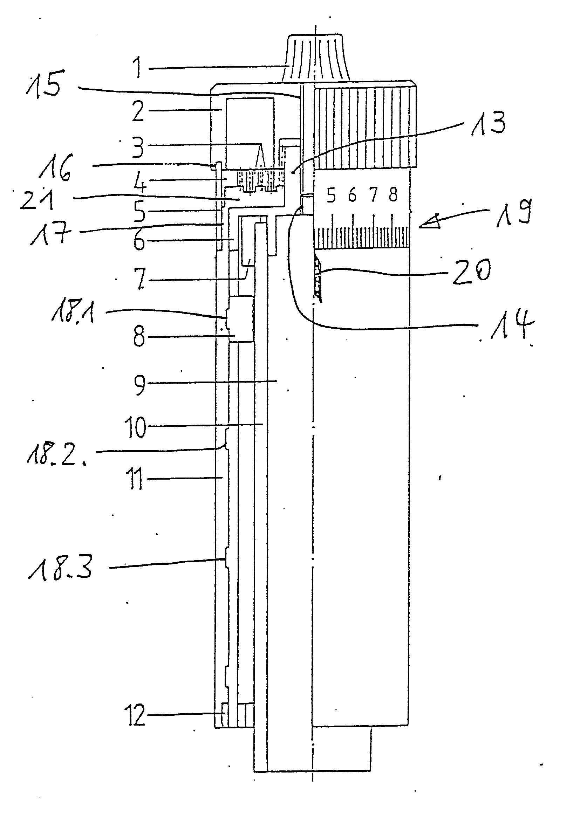

Ein Ausführungsbeispiel der Erfindung wird nachstehend anhand der beigefügten Zeichnung im einzelnen erläutert. Diese zeigt in ihrer

einzigen Figur ein Ausführungsbeispiel eines Flaschendispensers in einer Ansicht von der Seite, teilweise im Schnitt.

In der einzigen Figur ist der Flaschendispenser links von der strichpunktierten Mittelachse im Schnitt gezeigt, während er rechts davon in einer Ansicht dargestellt ist. Der Flaschendispenser besteht aus einem Zylinder 10, dessen unteres Ende mit einem Ventilkopf fest verbunden ist. Zur näheren Ausgestaltung dieses Ventilkopfes sei auf die DE-PS 30 31 830 verwiesen.

In dem Zylinder ist ein Kolben 9 längsverschieblich geführt. Durch eine Bewegung des Kolbens 9 innerhalb des Zylinders 10 nach oben wird Flüssigkeit in den Zylinder eingesaugt. Durch eine anschließende Bewegung des Kolbens nach unten wird diese Flüssigkeit dann wieder aus dem Zylinder verdrängt und aus dem Flaschendispenser abgegeben. Mit dem Kolben 9 ist die Innenhülse 6 verbunden. Am oberen Ende besitzt die Führungshülse 6 einen nach oben vorstehenden, zylindrischen Zapfen 13, der an seiner Außenseite einen Außenzahnkranz trägt. Weiterhin ist in dem Zapfen 13 der Führungshülse 6 ein Innengewinde 14 vorhanden.

In den Außenzahnkranz des Zapfens 13 greift ein Innenzahnkranz ein, der im Inneren des Drehknopfs 2 ausgebildet ist. Der Drehknopf 2 ist also mit dem Zapfen 13 der Führungshülse 6 drehfest verbunden. Der Drehknopf 2 weist eine axiale Zentralbohrung 15 auf, durch die die mit dem Zentralgewinde 14 der Führungshülse 6 verschraubbare Klemmschraube 1 verläuft. Die Klemmschraube 1 besitzt einen oberen Teil, der im Durchmesser größer ist und mit einer Schulter an der oberen Endfläche des Drehknopfes 2 anliegt, sowie einen unteren Teil, der ein Gewinde trägt. Mit diesem Gewinde wird die Klemmschraube 1 mit dem Innengewinde 14 des Zapfens 13 der Führungshülse 6 verschraubt.

Am radial äußeren, unteren Ende des Drehknopfes 2 befindet sich eine ringförmige Nut 16, in der das obere Ende des Skalenrings 5 gelagert ist. Das untere Ende des Skalenrings 5 ist in einem Absatz 17 der Außenhülse 11 gelagert. Der Skalenring 5 ist relativ zum Drehknopf 2 und zur Außenhülse 11 axial fest, aber drehbeweglich gelagert. In der inneren Mantelfläche der Außenhülse 11 sind drei wendelförmige Nuten 18.1, 18.2 und 18.3 vorgesehen, die gegeneinander um jeweils 120° versetzt sind. In der Führungshülse sind axial verlaufende Schlitze vorgesehen. Sowohl in den wendelförmigen Nuten 18.1 - 18.3 in der Innenfläche der Außenhülse 11 als auch den axialen Schlitzen der Innenhülse 6 sind Anschlagkörper 8 angeordnet. Der Anschlagkörper 8 besitzt an seinem radial äußeren Ende einen Vorsprung, der in eine entsprechende wendelförmige Nut 18.1 eingreift. Weiterhin besitzt er eine im wesentlichen rechteckige Querschnittsfläche, so daß er in einem axial verlaufenden Schlitz in der Innenhülse nach oben bzw. unten gleiten kann. Schließlich ragt ein Teil des Anschlagkörpers in den Bereich zwischen der Führungshülse 6 und dem Zylinder 10. Dieser Teil dient als Anschlag an dem Gegenanschlag 7, der am oberen Ende des Zylinders 10 mit diesem verbunden ist. Durch den Anschlag des Anschlagkörpers 8 an dem Gegenanschlag 7 wird also die Bewegung des Anschlagkörpers 8 nach oben begrenzt. Der Anschlagkörper 8 bewegt sich nach oben bzw. unten, wenn die Führungshülse 6 relativ zur Außenhülse 11 gedreht wird. Der Weg des Anschlagkörpers 8 nach unten wird durch den Führungsring 12 begrenzt, der mit einem Schnappverschluß mit der Führungshülse 6 verbunden ist.

Der axiale Abstand der Oberkante des Anschlagkörpers 8 von der Unterkante des Gegenanschlags 7 bestimmt den Hub des Dispensers und damit das eingesaugte Flüssigkeitsvolumen. Durch eine Relativdrehung zwischen der Führungshülse 6 und der Außenhülse 11 kann über eine axiale Bewegung der Anschlagmutter 8 dieser Hub und damit das einzusaugende Flüssigkeitsvolumen verändert werden. Eine Drehung der Führungshülse 6 wird dabei durch eine Drehung des Drehknopfes 2 erreicht, da dieser Drehknopf 2 mit der Führungshülse 6 axial drehfest verbunden ist. Die Kolbeneinheit wird von dem Kolben 9, der Führungshülse 6 und dem Griffstück 2 gebildet. Die Führungshülse 6 verläuft in ihrem unteren Bereich koaxial zur äußeren Mantelfläche des Zylinders 10. Zwischen der Innenseite der Führungshülse 6 und der Außenseite des Zylinders 10 ist ein radialer Abstand vorgesehen, in dem derjenige Teil des Anschlagkörpers 8 hineinragt, der mit dem Gegenanschlag 7 zusammenwirkt. Der obere Teil der Führungshülse 6 schließt mit einem scheibenförmigen Stück ab, von dem der Zapfen 13 nach oben wegragt.

Der Skalenring 5 trägt an seiner äußeren Mantelfläche eine Skala 19. An der Außenfläche der Außenhülse 11 ist eine Markierung 20 in der Nähe der Skala 19 angebracht, so daß die Skaleneinstellung abgelesen werden kann.

Die Außenhülse 11 ist koaxial außerhalb der Führungshülse 6 angeordnet und mit der Kolbeneinheit, bestehend aus Kolben 9, Führungshülse 6 und Drehknopf 2, axial fest und radial drehbar verbunden. Der Skalenring 5 ist sowohl mit der Kolbeneinheit als auch mit der Außenhülse 11 axial fest und radial drehbar verbunden. Weiterhin ist der Skalenring 5 mit der Kolbeneinheit, bestehend aus Kolben 9, Führungshülse 6 und Drehknopf 2, durch ein Untersetzungsgetriebe derart verbunden, daß einem bestimmten Drehwinkel der Kolbeneinheit ein geringerer Drehwinkel des Skalenringes 5 entspricht. Zu diesem Zweck besteht das Untersetzungsgetriebe aus einem Zahnradgetriebe. An der Oberseite eines am oberen Ende der Außenhülse 11 vorgesehenen Flansches 21 sind zwei ineinandergreifende Zahnräder 3 vorgesehen, die um vertikale, im radialen Abstand verlaufende Achsen drehbar gelagert sind. Die Lagerung der Zahnräder 3 wird durch kreiszylinderförmige Vertiefungen in der oberen Fläche des Flansches 21 gebildet. Das radial äußere Zahnrad 3 kämmt mit einem Innenzahnkranz, der an der Innenseite des Zwischenrings 4 ausgebildet ist, der seinerseits mit dem Skalenring 5 verklebt ist. Der Innenzahnkranz ist also fest mit dem Skalenring 5 verbunden. Das radial innere Zahnrad 3 kämmt mit dem Außenzahnkranz an der Außenumfangsfläche des Zapfens 13 der Führungshülse 6, also mit einem mit der Kolbeneinheit fest verbundenen Außenzahnkranz. Über den Umfang des Flansches 21 können mehrere, vorzugsweise 3, Zahnradpaare angeordnet sein.

Im Betrieb des Flaschendispensers wird beispielsweise die Außenhülse 11 festgehalten und der Drehknopf 2 gedreht. Es findet also eine Relativdrehung zwischen dem Drehknopf 2 und der Außenhülse 11 statt. Mit dem Drehknopf 2 wird die Führungshülse 6 gedreht. Gleichzeitig verschiebt sich der Anschlagkörper 8 - je nach Drehrichtung - nach oben oder nach unten. Durch die Drehung der Führungshülse 6 werden auch die Zahnräder 3 in Drehung versetzt. Sie treiben über den Innenzahnkranz des Zwischenrings 4 den Skalenring 5 an.

Der Skalenring 5 dreht sich also bei einer Drehung des Drehknopfs 2 relativ zur Außenhülse 11 sowohl relativ zum Drehknopf 2 also auch relativ zur Außenhülse 11. Der Skalenring 5 dreht sich aufgrund der Untersetzung langsamer als der Drehknopf 2. Es ist also möglich, den Dispenser derart abzustimmen, daß mehreren Drehungen des Drehknopfs 2 lediglich eine einzige volle Drehung des Skalenrings 5 entspricht. Hierdurch wird stets eine eindeutige Zuordnung des Skalenrings 5 bzw. der Skala 19 zu der Markierung 20 gewährleistet. Gleichzeitig ist es möglich, die wendelförmigen Nuten 18.1 - 18.3 mit einer relativ flachen Steigung auszugestalten, so daß eine genaue und leichtgängige Einstellung gewährleistet ist und ein selbständiges Verstellen auf Zug verhindert wird (Selbsthemmung).

Durch die Klemmschraube 1 wird es ermöglicht, daß das einmal eingestellte Volumen durch Verspannen des Skalenrings 5 und/oder des Zwischenrings 4 zwischen Außenhülse 11 und Drehknopf 2 fest arretiert werden kann. Durch das Verschrauben der Klemmschraube 1 wird die Führungshülse 6 und mit ihr über den Flansch 21 die Außenhülse 11 mit deren Absatz 17 auf den Drehknopf 2 und dessen Nut 16 zubewegt. Der Skalenring 5 wird also zwischen der Außenhülse 11 und dem Drehknopf 2 verklemmt, so daß das eingestellte Hubvolumen nicht versehentlich verstellt werden kann. Falls das Flüssigkeitsvolumen wieder verstellt werden soll, wird die Klemmschraube 1 gelöst, und eine Verstellung ist wieder möglich.

Die Skala 19 des Skalenrings 5 kann gegenüber der Markierung 20 der Außenhülse 11 justiert werden. Zu diesem Zweck wird zwischen dem Zwischenring 4 und dem Skalenring 5 ein Klebstoff mit einer bestimmten Aushärtzeit eingebracht. Anschließend, also noch vor dem Aushärten des Klebstoffes, werden Skalenring 5, Außenhülse 11 und Drehknopf 2 einschließlich Führungshülse 6 in die richtigen Positionen gebracht. Anschließend wartet man ab, bis der Klebstoff ausgehärtet ist. Der Dispenser ist dann - richtig justiert - gebrauchsfertig.

Bei dem Flüssigkeitsdispenser läßt sich mit beispielsweise zwei Umdrehungen der gesamte Volumenbereich abtasten, er ist selbstarretierend aufgrund der relativ geringen Steigung der wendelförmigen Nuten, und er verfügt zusätzlich über eine Feststellschraube.

Durch Drehen des Drehknopfes 2 und gleichzeitiges Festhalten des Außenhülse 11 wird erreicht, daß sich der Anschlagkörper 8 in den Führungsnuten 18.1 - 18.3 der Außenhülse 11, angetrieben durch die axialen Schlitze der Führungshülse 6, nach oben oder unten bewegt. Da der Zylinder 10, an dem der Gegenanschlagring 7 am oberen Ende fest verklebt ist, mit dem Ventilkopf verbunden ist (vgl. DE-PS 30 31 830), kann der Hubweg des Kolbens 9 stufenlos eingestellt werden. Das zu dosierende Volumen wird durch den Durchmesser des Zylinders 10 und den Hubweg bestimmt. Dieses zu dosierende Volumen kann dann an der Skala 19 abgelesen werden.

Um die Steigung der wendelförmigen Nuten in der Außenhülse 11 möglichst gering zu halten, was eine genaue und leichtgängige Einstellung gewährleistet, wurde der Skalenring 5 gegenüber dem Drehknopf 2 über ein Planetengetriebe 3 auf 1:2,5 untersetzt. Die geringe Steigung der wendelförmigen Nuten verhindert ein selbständiges Verstellen auf Zug. Zusätzlich kann das eingestellte Volumen mittels der Klemmschraube 1 durch Verspannen des Skalenrings 5 zwischen Außenhülse 11 und Drehknopf 2 fest arretiert werden.

Die Führungshülse 6 ist mit dem Drehknopf 2 über eine Verzahnung, die ein axiales Spiel erlaubt, verbunden. Der Führungsring 12, der mit einem Schnappverschluß mit dem unteren Ende der Führungshülse 6 verbunden ist, verhindert ein Ausdrehen des Anschlagkörpers 8. Der Skalenring 5 wird mit dem den Innenzahnkranz tragenden Zwischenring 4 nach Justage des Volumens fixiert, beispielsweise durch Aushärten eines Klebstoffs.

## Ansprüche

1. Flaschendispenser zum Ansaugen und Abgeben von Flüssigkeit, bestehend aus einem Zylinder (10) mit einem Gegenanschlag (7), einer Kolbeneinheit (9, 6, 2) mit einem in dem Zylinder (10) längsverschieblich geführten Kolben (9), einem Griffstück (2) und einer den Zylinder (10) umgreifenden Führungshülse (6), die koaxial zur äußeren Mantelfläche des Zylinders (10) verläuft, einem Skalenring (5), einer Außenhülse (11), die koaxial außerhalb der Führungshülse (6) angeordnet ist und die mit der Kolbeneinheit (9, 6, 2) axial fest und radial drehbar verbunden ist, und einem mit dem Gegenanschlag (7) zusammenarbeitenden Anschlagkörper (8), der in der Art eines Kulissensteins in je einer in den Hülsen (6; 11) ausgebildeten axialen Nut und einer wendelförmigen Nut (18.1 - 18.3) verschieblich angeordnet ist, so daß der Hub des Kolbens (9) zur Erzielung unterschiedlicher Saugvolumen veränderbar ist, dadurch gekennzeichnet, daß der Skalenring (5) sowohl mit der Kolbeneinheit (9, 6, 2) als auch mit der Außenhülse (11) axial fest und radial drehbar verbunden ist, und daß der Skalenring (5) mit der Kolbeneinheit (9, 6, 2) durch ein Untersetzungsgetriebe (3) derart verbunden ist, daß einem bestimmten Drehwinkel der Kolbeneinheit (9, 6, 2) ein geringerer Drehwinkel des Skalenringes (5) entspricht.

2. Flaschendispenser nach Anspruch 1, dadurch gekennzeichnet, daß der Skalenring (5) mit dem Griffstück (2) der Kolbeneinheit (9, 6, 2) verbunden ist.

3. Flaschendispenser nach Anspruch 2, dadurch gekennzeichnet, daß der Skalenring (5) in einer Nut (16) an der Unterseite des Griffstücks (2) geführt ist.

4. Flaschendispenser nach einem der vorhergehenden Ansprüche, dadurch gekennzeichnet, daß der Skalenring (5) in einem Absatz (17) am oberen, radial äußeren Ende der Außenhülse (11) gelagert ist.

5. Flaschendispenser nach einem der vorhergehenden Ansprüche, dadurch gekennzeichnet, daß das Untersetzungsgetriebe (3) aus einem Zahnradgetriebe besteht.

6. Flaschendispenser nach Anspruch 5, dadurch gekennzeichnet, daß an der Oberseite eines am oberen Ende der Außenhülse (11) vorgesehenen Flansches (21) zwei ineinandergreifende Zahnräder (3) um vertikale, im radialen Abstand verlaufende Achsen drehbar gelagert sind, von denen das radial äußere mit einem mit dem Skalenring (5) fest verbundenen Innenzahnkranz und das radial innere mit einem mit der Kolbeneinheit (9, 6, 2) fest verbundenen Außenzahnkranz kämmt.

7. Flaschendispenser nach Anspruch 6, dadurch gekennzeichnet, daß über den Umfang des Flansches (21) mehrere, vorzugsweise drei, Zahnradpaare angeordnet sind.

8. Flaschendispenser nach Anspruch 6 oder 7, dadurch gekennzeichnet, daß der Innenzahnkranz an der Innenseite eines Zwischenringes (4) ausgebildet ist, der mit dem Skalenring (5) verklebt ist.

9. Flaschendispenser nach einem der Ansprüche 6 bis 8, dadurch gekennzeichnet, daß der Außenzahnkranz an der Außenseite des oberen Endes (13) der Führungshülse (6) ausgebildet ist.

10. Flaschendispenser nach Anspruch 9, dadurch gekennzeichnet, daß das obere Ende (13) des Außenzahnkranzes der Führungshülse (6) in einen Innenzahnkranz des Griffstücks (2) eingreift.

11. Flaschendispenser nach einem der vorhergehenden Ansprüche, dadurch gekennzeichnet, daß das Griffstück (2) eine axiale Zentralbohrung (15) aufweist, durch die eine mit einem Zentralgewinde (14) der Führungshülse (6, 13) verschraubbare Klemmschraube (1) verläuft.

15

1

2

3

16

4

21

5

17

6

7

18.1

8

9

10

18.2.

11

18.3

12

13

5 6 7 8

19

20

14